Europäisches Patentamt

European Patent Office

Office européen des brevets

(11) Publication number: **0 213 407**
**A2**

# (12) EUROPEAN PATENT APPLICATION

(21) Application number: 86110607.8

(22) Date of filing: 31.07.86

(51) Int. Cl.⁴ **G01K 7/24** , G01K 1/02 , G01K 13/00

(30) Priority: 26.08.85 US 769529
15.01.86 US 818942

(43) Date of publication of application:
**11.03.87 Bulletin 87/11**

(84) Designated Contracting States:
**AT BE CH DE FR GB IT LI LU NL SE**

(71) Applicant: SPACELABS, INC.
**4200 150th Avenue NE**
**Redmond Washington 98073-9713(US)**

(72) Inventor: **Lane, Philip S.**
**16114 N.E. 98th**
**Redmond Washington(US)**

(74) Representative: **Perani, Aurelio et al**
**c/o JACOBACCI-CASETTA & PERANI S.p.A 7,**
**Via Visconti di Modrone**
**I-20122 Milano(IT)**

(54) **Method and apparatus for body temperature measurement with multiple probe types.**

(57) A temperature measuring apparatus is disclosed which measures the output of a temperature probe containing a thermistor transducer while maintaining compatibility with either or two different probe types. At least two temperature input channels are multiplexed along with at least two calibration voltages for each thermistor probe type to the input of parallel amplifiers, there being a different amplifier for each probe type. A detection circuit is provided for automatically determining the type of probe present in each channel. In response to the circuit, other circuitry enables the appropriate amplifier whose output is digitized by a 10-bit A/D converter circuit. A processor using a look up table at least partially linearizes the temperature to resistance curve of the probe type being used in response to the calibration output, the determination of probe type and the A/D circuit output.

FIG. 1

# METHOD AND APPARATUS FOR BODY TEMPERATURE MEASUREMENT WITH MULTIPLE PROBE TYPES

This invention relates to patient monitoring, more particularly, to measuring patient body temperature using a temperature probe containing a thermistor transducer, selected from a plurality of different thermistor transducer types.

Generally speaking in temperature measurement applications, the thermistor outputs are amplified and digitized, it being desirable where possible to use off-the-shelf A/D converters. Two typical thermistor types are Model No. YSI400 and YSI700 made by Yellow Springs Instrument Company of Yellow Springs, Ohio, United States of America.

The resistance versus temperature curve of a typical thermistor is highly non-linear. Uncompensated, this creates a problem in A/D conversion. At the high temperature end of the range the change in resistance to change in temperature ($\Delta R/\Delta T$) ratio is quite small, mandating a higher-resolution A/D converter (more bits) to preserve a given $\Delta t$ resolution.

Ordinarily correction can be accomplished with a series/shunt resistor network across the thermistor. Sometimes an auxiliary thermistor with a complementary $\Delta R/\Delta T$ curve is used. Using these techniques, fairly good straight-line conformity can be achieved.

However, these methods are "thermistor specific". By itself, any given network could not completely compensate for both of the specified thermistor types mentioned above. Some non-linearity would persist. Beyond this, additional A/D range is required because the two thermistor output ranges do not coincide.

When excited with a current low enough to preclude any substantial self-heating, the voltage output from either thermistor type is too low for direct conversion. An amplifier is required, introducing additional problems through gain and offset variability. Ordinarily these problems would be minimized by providing trim adjustments, and/or high precision components, but this is not entirely satisfactory from a manufacturing standpoint. A similar accuracy problem would normally arise with the A/D converter reference, which could also require trimming. Periodic recalibration would be necessary.

The present invention provides an apparatus for measuring temperature which includes a temperature input channel. The channel is coupled to at least one and preferably two thermistor probes selected from at least two different temperature probe types. A means is provided for calibrating the temperature channel in response to the thermistor probe type coupled thereto. Means are provided for automatically determining which thermistor probe type is present.

A separate amplifier for each probe type is provided and circuit means responsive to the automatic determination of thermistor probe type is adapted to enable an appropriate one of the amplifiers.

A processor is provided for linearizing the temperature to resistance response curve of each probe in response to the channel calibration, the automatic determination of probe type and the output of the amplifiers.

FIG. 1 is an overall block diagram of the preferred embodiment circuit of the present invention.

FIGS. 2A and 2B are schematics of two probes for use with the present invention.

FIG. 3 is a more detailed circuit diagram of a probe identification portion and logic circuit portion of the circuit of FIG. 1.

FIG. 4 is a graph showing the relation between measured and calibrated voltages versus temperature.

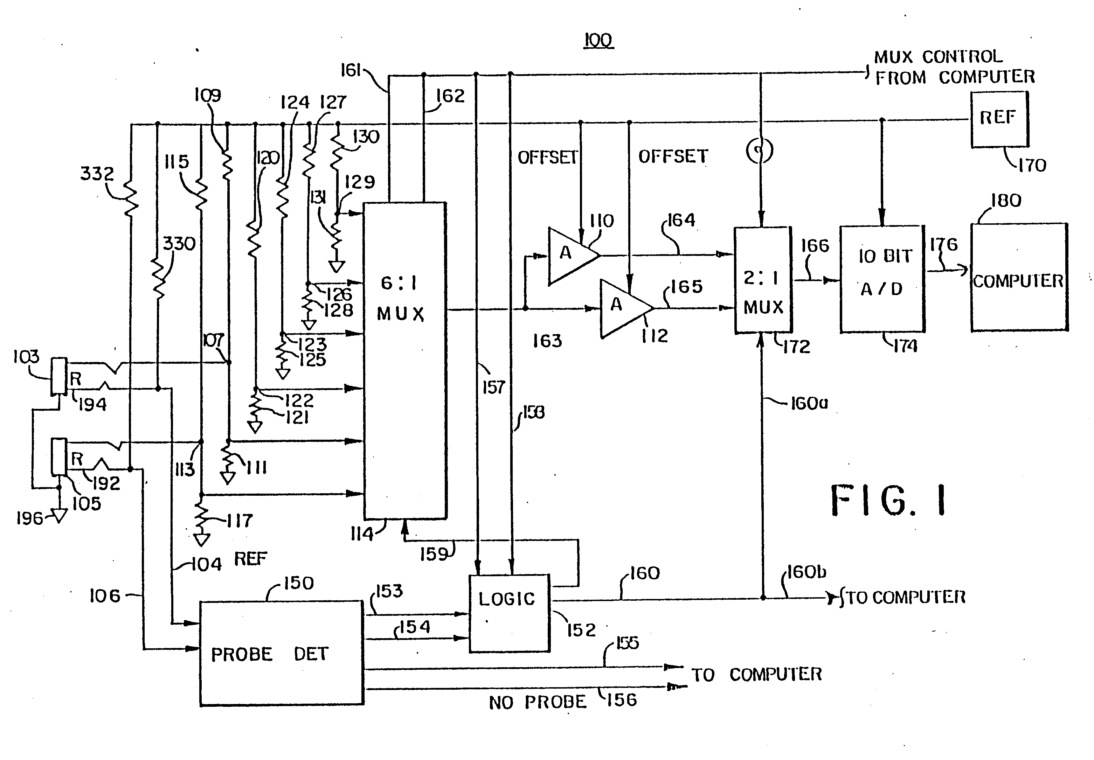

Referring now to Figure 1, a block diagram of the present invention circuit designated generally 100 is shown. Probe jacks 103 and 105 are provided. Probe jack 103 is coupled to a junction 107 between a 39.2K resistor 109 and 10.0K resistor 111. The other side of the 39.2K resistor 109 is coupled to a 5.0 voltage reference source 170. Junction 107 is coupled as an input to a 6:1 multiplexer circuit 114. Similarly, probe jack 105 is coupled to junction 113 between 39.2K resistor 115 and 10.0K resistor 117. Junction 113 is coupled as a second input to 6:1 multiplexer 114. Use of the 39.2K and 10.0K resistors with the YSI probes provides a crude partial linearization of the response of the probe outputs to temperature. The resistor values were chosen to linearize either YSI probe to about the same degree.

Four precision voltages are provided as inputs to mux 114 as follows: 39.2K precision resistor 120 is coupled between a 5.0 volt reference 170 and electrical ground in series with 3320 ohm precision resistor 121. The junction 122 between resistors 120 and 121 is coupled to multiplexer 114. Similarly, the junction 123 between 39.2K resistor 124 and 1580 ohm precision resistor 125; the junction 126 between 39.2K resistor 127 and 2290 ohm resistor 128; and the junction 129 between 39.2K resistor 130 and 1000 ohm resistor 131 are coupled as inputs to multiplexer circuit 114.

The precision voltages present at junctions 122 and 126, for example, provide low range and high range test signals for a YSI 700 probe to multiplexer 114 while junctions 123 and 129 behave similarly for a YSI400 probe.

Probe jacks 103 and 105 are also coupled via lines 104 and 106, respectively, to probe detection circuit 150 which is capable of determining which probe type is coupled to the jacks 103 and 105. Circuit 150 can also determine if no probe is present.

The information on which type of probe is present is provided to logic circuit 152 via lines 153 and 154 while the "no probe" information is provided over lines 155 and 156 to computer 180. Logic circuit 152 in response to the output of probe detector circuit 150 and computer control signals over lines 157 and 158 provides output signals via lines 159 and 160 to the 6:1 multiplexer 114 and a 2:1 multiplexer circuit 172, respectively. The information on line 160 is also sent to computer 180.

The multiplexer 114 in response to the output of logic circuit 152 and control signals from computer 180 via lines 161 and 162 couples one of its inputs to output line 163 which in turn is coupled to the inputs of both operational amplifiers 110 and 112, respectively. Amplifier 110 is adapted to operate with a YSI400 probe, or with the signals from junctions 123 and 129, while amplifier 112 is adapted to operate with a YSI700 probe or with the signals from junctions 122 and 126. The outputs of both amplifiers are provided as parallel inputs over lines 164 and 165 to 2:1 multiplexer 172. Multiplexer 172 selects in response to the output of logic circuit 152 on line 160 which amplifier will be provided as an output over line 166 to 10 bit A/D converter circuit 174. The use of two separate amplifiers eliminates the problem of non-overlapping thermistor outputs. This is combination with the partial linearization mentioned above reduces the A/D requirement.

Without the above mentioned techniques, a resolution of 13-bits would be required. With the dual amplifiers and resistor pairs 115,117 and 109,111, a 10-bit conversion is adequate. The 10 bit A/D circuit 174 uses a conventional 8 bit A/D circuit. The most significant bit (MSB) is obtained using an absolute value circuit to get a "sign" bit. The next-to-MSB is obtained by clocking the 8-bit A/D circuit twice, as described in known component application notes. See application notes in National Semiconductor Data Books. The output of A/D circuit 174 is therefore a digital voltage signal representative of the temperature of the patient. It is forwarded serially to computer 180 via line 176. The converted signal from either probe type has by this time undergone only a rough linearization by the resistor pairs 115,117 or 109,111. The final curve straightening is performed in the computer 180 using a look-up table.

The low range and high range precision voltages present at junctions 122, 123, 126 and 129 are calibration signals which are measured periodically. Two calibration voltages are provided for each probe type. Based on ideal versus measured values, gain and offset correction coefficients are determined by the computer for each amplifier. These are applied to the thermistor measurements to correct for any channel inaccuracies. The accuracy requirement for each amplifier is now substantially reduced, allowing the use of less expensive components along the line. Precision is still required in the resistors which supply the calibration voltages, however.

Accuracy of the A/D reference voltage from circuit 170 is unimportant since this reference also supplies the thermistors, calibration voltage resistors, and amplifier offsets. Gain drift in the A/D circuit due to reference variation is cancelled since the thermistor outputs and amplifier offsets will also vary in the same way, in the same proportion.

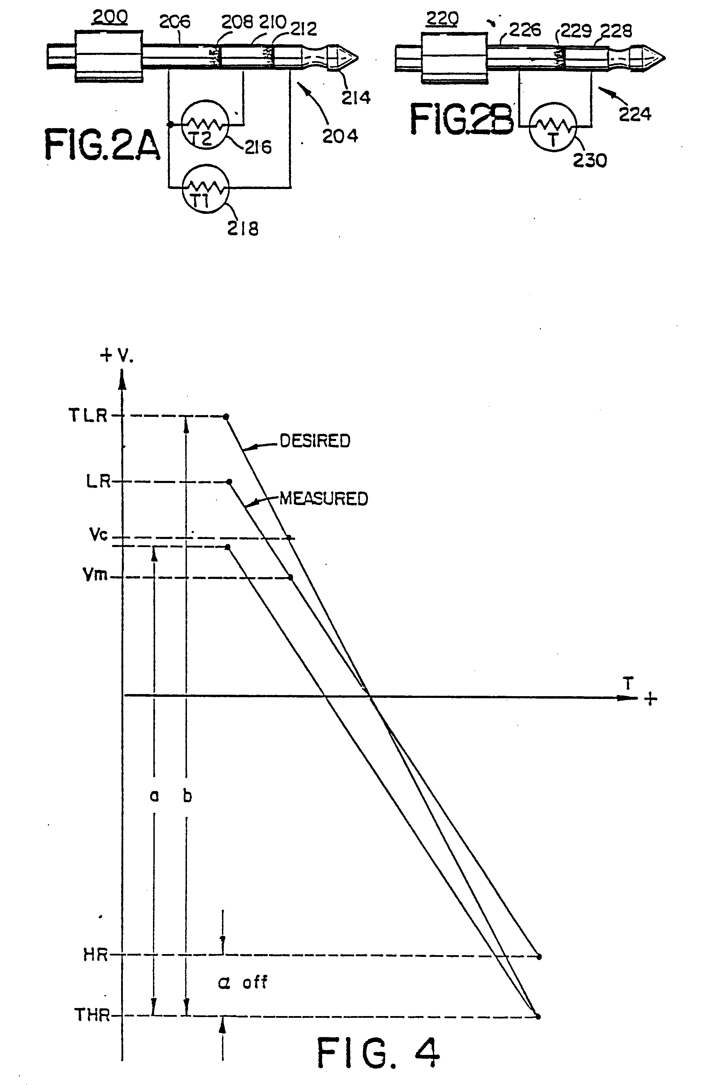

FIGS. 2A and 2B represent two different probes 200 and 220, respectively, which are suitable for use with the present invention. In the preferred embodiment, probe 200 is a Model No. YSI700 probe while probe 220 is a Model No. YSI400 probe, both manufactured by Yellow Springs Instrument Company, Yellow Springs, Ohio. A sensor coupled to the body of a patient is coupled to the end of the probe. The other end of the probe is a plug for mating engagement with a jack whereby the probe is coupled to a circuit.

Referring to FIG. 2A, probe 200 comprises a pair of thermistors 216 and 218 which are applied to a location on the patient's body where a temperature reading is desired. The thermistors are contained in a probe tip at the end of a cable. The probe tip is attached to the patient by an adhesive patch, for example. Probe 200 further comprises a plug portion designated generally 204 adapted for mating engagement with a standard jack such as probe jacks 103 or 105.

Plug portion 204 comprises an electrically conducting barrel portion 206, separated by insulator 208 from conducting ring portion 210, which in turn is separated by insulator 212 from conducting tip portion 214. Thermistor 216 is electrically coupled to barrel and ring portions 206 and 210, respectively, while thermistor 218 is electrically coupled to barrel and tip portions 206 and 214, respectively.

In FIG. 2B, probe 220 is similar to probe 200 except that it comprises a single thermistor sensor 230 coupled to barrel and tip portions 226 and 228, respectively, of plug portion 224. Portions 226 and 228 are separated by insulator 229. The presence or absence of thermistor 216 is used to differentiate between YSI700 and YSI400 type temperature probes.

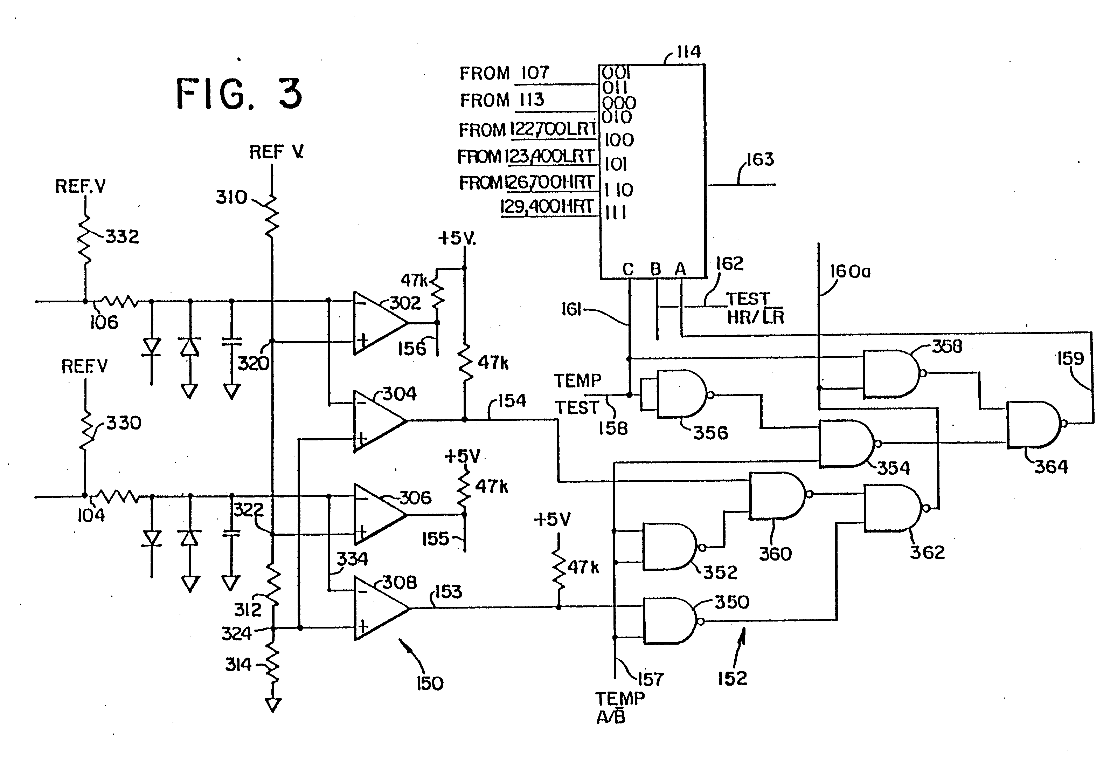

Details of the preferred embodiment of the probe detector circuit 150 as well as details of the logic circuit 152 are provided in FIG. 3. The probe detector circuit 150 comprises four comparator circuits even numbers 302 through 308. The output of comparators 302 and 304 inform the logic circuit 152 about the probe coupled to jack 105 while comparators 306 and 308 inform the logic circuit 152 about the probe coupled to jack 103. The probe detector circuit further comprises a voltage divider circuit formed by three series resistors 310, 312 and 314 whose values are 24.9K, 15.0K and 24.9K, respectively. At one end resistor 310 is coupled to reference voltage source 170 while at the other end resistor 314 is coupled to electrical ground. Junctions 320 and 322 between resistors 310 and 312 are coupled to the positive terminals of comparators 302 and 306 while junction 324 between resistors 312 and 314 is coupled to the positive terminals of comparators 304 and 308.

The R ring connector 192 of jack 105, i.e., the portion of jack 105 intended to make electrical contact with portion 210 of probe 200, is coupled to the reference voltage 170 through 16.2K ohm resistor 330 and to the negative input terminal of comparator 306 while the R ring connector 194 of jack 103 is coupled to the reference voltage 170 through 16.2K ohm resistor 332 and to the negative input terminal of comparator 302.

Using jack 103 as an example (the circuit for jack 105 works the same way), if no probe is located in jack 103 then the effective probe circuit between the ring connector 194 and electrical ground 196 will be open and the 5V reference voltage will be coupled to the negative input terminal of comparator 306 through 16.2K resistor 330 while the 5V reference voltage will be coupled to the positive input terminal through 24.9K resistor 310. Therefore, the output of comparator 306 will be a logic low at line 155 giving an indication that no probe is present.

If, however, a YSI 700 plug is present in jack 103, the thermistor 216 will provide a finite resistance between the R ring connector 194 at 210 in FIG. 2A and electrical ground 196 at 206 in FIG. 2A and the 5V reference voltage will be divided by the YSI700 probe resistance and the 16.2K resistor 330 resulting in a voltage which is less than the voltage present at the positive terminal of comparator 306. The comparator 306 output will be positive at 155 indicating that a probe is present.

The same voltage available at the negative input terminal of comparator 306 is available at the negative input terminal of comparator 308 since they are coupled by line 334. The 5V reference voltage from 170 is coupled to the positive terminal of comparator 308 through resistors 310 and 312 and is less than the voltage present at the positive terminal of comparator 306. The resistors 310 and 312 are chosen so that if a YSI700 probe is present at jack 103, the reference voltage divided through the probe and resistor 330 will be less than the positive input voltage at comparator 306 but more than the positive input voltage at comparator 309. Therefore, the output of comparator 308 will be negative on line 153 indicating the presence of a YSI 700 probe.

Finally, if a YSI400 probe is present in jack 103, there is a short between the ring connector 194 at 210 in FIG. 2B and electrical ground 196 at 206 in FIG. 2B and no voltage appears at the negative terminals of comparators 306 and 308 and the output of comparator 308 remains high indicating that a YSI400 probe is present. The comparators 302 and 304 work in the same way with jack 105 and resistor 332. The "no probe" output for jack 105 appears at the output of comparator 302 at 156 while the YSI400 and 700 information is present at the output of comparator 304 and 154.

Figure 3 also shows the details of logic circuit 152. A temperature channel control signal TEMP A/B, from computer 180 is provided as an input to NAND gate 350, as two parallel inputs to NAND gate 352 and as a single input to NAND gate 354. Similarly, a temperature test control signal, TEMP TEST, is provided over line 158 from computer 180 as parallel inputs to NAND gate 356 and as a single input to NAND gate 358. The TEMP TEST signal is also provided via line 161 to the C select input terminal of multiplexer 114. The output of comparator 304 is provided over line 154 as an input to NAND gate 360 while the output of comparator 308 is provided as an input to NAND gate 350 over line 153. The output of NAND gate 352 is provided as the other input to NAND gate 360. The outputs of NAND gates 350 and 360 are provided as inputs to NAND gate 362, while the output of NAND gate 356 is provided as an input to NAND gate 354. The output of NAND gate 362 is provided as an input to NAND gate 358, and the outputs of NAND gates 354 and 358 are provided as inputs to NAND gate 364 whose output is provided over line 159 to the A select terminal of multiplexer 114. A computer control signal, TEST HR/LR, for designating whether a high range or low range calibration check in a channel is to be performed is provided by computer 180 over line 162 as the B select input to multiplexer 114.

As explained earlier, the computer 180 through the control signals on lines 157 and 158 to logic circuit 152 and on lines 161 and 162 to multiplexer 114, obtains the readings from probes in jacks 103 and 105 at junctions 107 and 113, respectively, and calls for the low range and high range temperature calibration signals for each channel to be obtained from junctions 122, 123, 126 or 129 depending on the output of the logic circuit 152 as to whether a YSI400 or 700 probe is present in the channel undergoing test or sampling.

The logic circuit of FIGS. 1 and 3 works as follows. When the computer 180 requests a temperature reading from a particular channel, the TEMP TEST signal will be low and the C select input will be low. Since a temperature measurement of a channel is requested the status of the TEST/HR/LR signal is irrelevant and the determination of which input junction 107 or 113 will be passed onto the output line 163 is determined by the output of NAND gate 354 since the low TEMP TEST input to NAND gate 358 causes a high output to NAND gate 364. The other input to NAND gate 364 is from NAND gate 354 whose inputs are the TEMP A/B signal and the high ouput of NAND gate 356 due to a low pair of inputs from TEMP TEST. If channel A is to be tested, i.e. junction 107 is desired, then TEMP A/B will be low causing the output of NAND gate 364 to go high. This selects junction 107. If TEST TEMP is low then the output of NAND gate 364 is low selecting juntion 113 as the input.

If on the other hand it is desired to calibrate a particular channel, the TEMP TEST signal will be high and the low range and high range calibration signals will be selected by the TEST HR/LR signal. Selection of the low range signals (either junction 122 or 123) and selection of the high range signal (either junctions 126 or 129) is performed by the logic circuit depending on which probe type is present in the channel jack selected by the computer on line 157, signal TEMP A/B. For example, with TEST TEMP high and TEST HR/LR high and with TEMP A/B high, if a YSI700 probe is present in jack 103, then the input to NAND gate 350 from comparator 308 will be low causing its output to go high to NAND gate 362. Since TEMP A/B is high the output of NAND gate 360 is high. Two high inputs to NAND gate 362 causes its output to go low. A low input to NAND gate 358 causes its output to go high to NAND gate 364. The output of NAND gate 354 is high since TEMP TEST is high and two high inputs to NAND gate 364 causes its output to go low. A low output here in combination with high TEST TEMP and TEST HR/LR signals selects the 110 input of multiplexer 114 from junction 126, a high range YSI700 probe calibration signal.

Similar analyses for a YSI400 probe in jack 103 or for YSI400 or 700 probes in jack 105 can be performed to show how the circuits 150 and 152 work together with the computer input signals to select the proper input for coupling to line 163 of multiplexer 114. The output of NAND gate indicates whether a YSI 400 or 700 probe is present for the channel chosen by TEMP A/B. This signal is transmitted via line 160a to the 2:1 multiplexer 172 to select which amplifier output (from either amplifier 110 or 112) will be forwarded to the A/D 174. Remember the output from multiplexer 114 is sent to both amplifiers 110 and 112. Amplifier 110 is optimized for a YSI400 probe while amplifier 112 is optimized for a YSI700 probe.

The calibration procedure for the probe channels is described with reference to FIGS. 1, 3 and 4. In FIG. 4 a graph of voltage V versus temperature T is provided. For each probe type, if the channel to which the probe is coupled is accurate with no amplifier gain or offset errors or A/D circuit errors, the pair of precision calibration voltages provided for the probe type coupled to the channel should produce two known voltage readings at the lower and higher ends of the measurement range of the probe. These are labeled as TLR and THR in FIG. 4 for the True Low Reading and True High Reading. Since, however, there are offset and gain errors, etc., the actual voltage values measured from the A/D circuit when each of the precision voltages are chosen by the multiplexer 114 will be different from the true readings. They are shown on the graph of FIG. 4 as LR and HR for low reading and high reading. When the multiplexer is switched to look at the probe an actual measured reading Vm on FIG. 4 is obtained from the A/D circuit 174.

The offset correction factor X is equal to HR-THR while the gain correction factor Y equals -(TLR-THR)/(LR-HR). The corrected voltage is given by the expression

$$Vc = (Vm-X-THR) + THR = (Vm-HR)[(TLR-THR)/(LR-HR)] + THR$$

Hence, the computer periodically reads the voltages at junctions 107 and 113 and calls for calibration checks at the low and high range for each channel. The logic circuit selects which precision voltage inputs will be selected for calibration in response to the output of the circuit 150. In response to the calibration voltages selected and the measured probe voltage reading the computer performs the correction described above.

Once the corrected voltage is obtained it is compared with a look up table associated with that particular probe type which is stored in memory and the remaining linearization of the probe response is completed.

## Claims

1. A circuit for measuring body temperature comprising:

a thermister probe selected from at least two different probe types for providing a probe output signal representative of body temperature;

a temperature channel coupled to said probe including:

at least two amplifier circuits, one for each probe type for amplifying said probe output signals;

digitizing means for digitizing the output of said at least two amplifier circuits;

said apparatus further comprising:

processing means for converting digitized probe output signals to temperature readings and for providing control signals to said apparatus;

detection means coupled to said temperature channel for detecting which type of probe is coupled to said channel and for selecting one of said at least two amplifier circuits to provide said amplifier probe output signal to said digitizing means in response to said determination.

2. The apparatus of claim 1 wherein said apparatus further comprises means coupled to said temperature channel for partially linearizing said probe output signal with respect to temperature.

3. The apparatus of Claim 2 wherein said partial linearization means comprises a reference voltage source coupled through a first resistor to said thermister probe and through a second shunt resistor to electrical ground.

4. The apparatus of Claim 3 wherein said reference voltage source is also coupled to said amplifier circuits and said digitizing means to provide a reference voltage thereto.

5. The apparatus of Claim 1 wherein said apparatus further comprises calibration means for calibrating said temperature channel for each of said at least two probe types in response to said determination.

6. The apparatus of Claim 5 wherein said calibration means comprises:

means for generating at least two precision voltages for each probe type; and

coupling means for coupling said precision voltages to said channel in response to said determination of probe type.

7. The apparatus of Claim 6 wherein said coupling means further comprises multiplexer means including a plurality of input terminals coupled to said precision voltages and said probe and an output terminal coupled to said at least two amplifier circuits.

8. The apparatus of Claim 7 wherein said voltage generating means comprises:

a reference voltage source of a predetermined voltage;

a pair of series resistors for each precision voltage desired, said pair of series resistors coupled between said reference voltage source and electrical ground, said pair of series resistors forming a junction therebetween which is coupled to an input terminal of said multiplexer.

9. The apparatus of Claim 8 wherein said apparatus further comprises: means coupled to said temperature channel for partially linearizing said probe output signal with respect to temperature.

10. The apparatus of Claim 9 wherein said partial linearlization means comprises a reference voltage source coupled through a first resistor to said thermister probe and through a second shunt resistor to electrical ground.

11. The apparatus of Claim 10 wherein the resistor of each of said precision voltage resistor pairs and said first resistor coupled directly to said reference voltage are approximately the same voltage whereby any leakage current from said reference voltage source to said multiplexer will be substantially the same for each input terminal of said multiplexer.

12. The apparatus of Claim 5 wherein said apparatus further comprises:

at least two temperature probes;

means for generating at least two precision voltages for each probe type; and

coupling means for coupling said precision voltages and said probes to said channel in response to said determination of probe type and said processing means control signals.

13. The apparatus of Claim 12 wherein said coupling means further comprises multiplexer means including a plurality of input terminals coupled to said precision voltages and said probes and an output terminal coupled to said at least two amplifier circuits.

14. The apparatus of Claim 1 wherein said detection means further comprises:

means coupled to said temperature channel for producing a different voltage in response to the type of probe coupled to said temperature channel; and

means for comparing said voltage produced by said voltage producing means with at least two preselected voltage levels to produce an output signal indicative of the type of probe coupled to said channel

15. The apparatus of Claim 14 wherein said voltage producing means further produces a different voltage in response to the presence or absence of a probe coupled to said temperature channel and comprises a voltage reference source in series with a probe resistor of preselected value coupled to said probe; and

wherein said comparator means comprises at least two voltage comparators each having an input terminal coupled to said voltage reference source and said probe resistor; and

at least three resistors coupled in series between said reference votlage source and electrical ground for generating at least two reference voltages, said at least three resistors coupled to an input terminal of each of said comparators whereby said voltage produced by said voltage producing means is compared with said reference voltages.

16. The apparatus of Claim 1 wherein said apparatus further comprises:

at least two thermistor probes coupled to said temperature channel;

means for each of said at least two probes coupled to said temperature channel for producing a different voltage in response to the type of probe coupled to said temperature channel;

means for comparing said voltage produced by said voltage producing means with at least two preselected voltage levels to produce an output signal indicative of the type of each probe coupled to said channel.

17. The apparatus of Claim 16 wherein said voltage producing means further produces a different voltage in response to the presence or absence of a probe coupled to said temperature channel and comprises a voltage reference source in series with a probe resistor of preselected value coupled to said probe; and

wherein said comparator means comprises at least two voltage comparators for each probe, each comparator having an input terminal coupled to said voltage reference source and said probe resistor; and

at least three resistors coupled in series between said reference voltage source and electrical ground for generating at least two reference voltages, said at least three resistors coupled to an input terminal of each of said comparators whereby said voltage produced by said voltage producing means is compared with said reference voltages.

18. A method of measuring the body temperature of a patient measured from a probe attached to the patient's body comprising the steps of:

providing a different amplifier for each type of probe to be used in measuring body temperature;

coupling said amplifiers in parallel;

automatically identifying the type of probe being used;

selectively enabling said amplifier associated with the probe type being used in response to said identifying step;

digitizing the amplifier output;

converting said digital output voltage into temperature.

19. The method of claim 18 wherein said method further comprises the step of:

calibrating said temperature measurement including the steps of:

supplying at least two calibration signals for each probe type;

selectively coupling said at least two calibration signals to said parallel amplifier input in response to said identifying step; and

correcting the digitized probe output signals in response to the digitized calibration output signals.

20. The method of claim 15 wherein said method further comprises

providing in parallel at least two probe output signals; and

providing in parallel two pairs of calibration signals; and

multiplexing said probe output signals and said paris of calibration signals to said parallel amplifier input.

21. A method of measuring body temperature of a patient measured from a probe attached to the patient's body comprising the steps of

amplifying the output of said probe;

digitizing said amplified probe output;

automatically identifying the type of probe being used;

calibrating said digitized probe output including the steps of

supplying at least two calibration signals for each probe type;

selecting at least two calibration signals for amplification in response to said identifying steps;

amplifying said selected calibraiton signals;

digitizing said amplified calibration signals;

correcting the digitized probe output signals with said digitized calibration signals; and

converting said converted digitized probe output signals into temperature.

FIG. 1

100

MUX CONTROL FROM COMPUTER

REF — 170

6:1 MUX 114

2:1 MUX 172

10 BIT A/D 174

COMPUTER 180

PROBE DET 150

LOGIC 152

TO COMPUTER

NO PROBE 156

TO COMPUTER

0 213 407

FIG.2A

FIG.2B

FIG. 4

FIG. 3